# EUROPEAN PATENT APPLICATION

(11) **EP 4 834 749 A1**
(43) Date of publication of application: **04.11.2026**
(21) Application number: 25172948.9
(22) Date of filing: 28.04.2025
(51) Int. Cl.: B64C 1/14

(54) **SLIDING DOOR MECHANISM FOR AN AIRCRAFT, ASSOCIATED FUSELAGE STRUCTURE AND DOOR ASSEMBLY, AND AIRCRAFT**

(71) Applicant: AIRBUS Operations GmbH, 21129 Hamburg (DE)
(72) Inventor: Grunenberg, Jan, 21129 Hamburg (DE); Benthien, Hermann, 21129 Hamburg (DE)
(74) Representative: KASTEL Patentanwälte PartG mbB

(57) **Abstract**

In order to allow improvement of doors for aircraft, the invention proposes a fuselage structure (20) of an aircraft (10), the fuselage structure (20) comprising: a plurality of frames (23) that extend in a circumferential direction of the fuselage structure (20); an aerodynamic skin (24) that is supported by the frames (23); at least one pair of guiderails (31) that extend in a longitudinal direction of the fuselage structure (20) and that are supported by the frames (23) in a load transferring manner, wherein each pair of guiderails (31) defines a fuselage opening (25), wherein the guiderails (31) are configured to support a door leaf (35) in a sliding manner so that the door leaf (35) is movable along the longitudinal direction between a fully open position, in which the fuselage opening (25) is uncovered, and a fully closed position, in which the fuselage opening (25) is closed.

## Description

The invention relates to a sliding door mechanism for an aircraft. Specifically the invention relates to a fuselage structure, a door assembly, a locking mechanism, and an aircraft equipped therewith.

In the evolving landscape of aircraft design and engineering, efficiency, reliability, and performance are paramount. As aircraft structures become more sophisticated and the demand for weight-saving and operational efficiency increases, conventional solutions often reach their limits. One such area ripe for improvement is the design and integration of fuselage doors-specifically cargo, passenger (PAX), and maintenance doors.

Conventionally, these large fuselage cut-outs are closed using doors that are hinged continuously along one side, using hook-based systems to secure them against the fuselage. Continuous hinges not only add substantial weight to the structure, but they also require a complex and expensive assembly. Moreover, these hinge-based systems are dependent on standardized aircraft frame patterns-commonly spaced at 21 inches-meaning that the pressure loads from within the cabin or cargo area must be distributed across strong door frames that carry these lateral loads to the fuselage frames. This results in a system that is heavy, mechanically complex, and less adaptable to modern aircraft demands.

It is the object of the invention to improve doors for aircraft. The object is achieved by the subject-matter of the independent claims. Preferred embodiments are subject-matter of the dependent claims.

The invention provides a fuselage structure of an aircraft, the fuselage structure comprising a plurality of frames that extend in a circumferential direction of the fuselage structure; an aerodynamic skin that is supported by the frames; at least one pair of guiderails that extend in a longitudinal direction of the fuselage structure and that are supported by the frames in a load transferring manner, wherein each pair of guiderails defines a fuselage opening, wherein the guiderails are configured to support a door leaf in a sliding manner so that the door leaf is movable along the longitudinal direction between a fully open position, in which the fuselage opening is uncovered, and a fully closed position, in which the fuselage opening is closed.

Preferably, the fuselage structure further comprises a roller mechanism that is disposed on the guiderails and includes a plurality of rollers that are configured to engage a door leaf to allow a sliding movement thereof.

Preferably, each guiderail comprises at least one roller groove that is configured to receive and support the rollers in a movable manner.

Preferably, the fuselage structure further comprises a locking mechanism that is switchable between an unlocked state, in which movement of an installed door leaf is possible, and a locked state, in which movement of the installed door leaf is prevented.

Preferably, the locking mechanism is integrated into the roller mechanism so that the locking mechanism, when in the locked state, exerts a force on the rollers to prevent movement by means of frictional engagement and/or positive-locking.

Preferably, in the unlocked state, the rollers are able to roll, and in the locked state the rollers are forced against the guiderail, preferably a side wall portion thereof, or towards an installed the door leaf.

Preferably, the guiderails are configured to enable a load bearing joint between a door leaf guided therein and the frames. Preferably, the load bearing joint is able to transfer bending loads and/or the load bearing joint includes or consists of a bending-stiff joint.

Preferably, the load bearing joint is formed at least in the fully closed position, preferably at least partially by means of the locking mechanism being in the locked state.

Preferably, each guiderail comprises a pair of side wall portions and a bottom portion that define a guiding channel which is configured to receive and support a door leaf in a sliding manner.

Preferably, the roller mechanism and/or the locking mechanism is disposed on at least one of the side wall portions.

Preferably, the roller mechanism is disposed on at least one of the side walls, wherein the locking mechanism, preferably an actuation member of the locking mechanism, is partially disposed on the bottom portion.

Preferably, each roller groove is disposed or formed on the side wall portions.

The invention provides a door assembly of an aircraft, the door assembly comprising a previously described fuselage structure, and a door leaf that is supported to slide in the guiderails.

Preferably, the door leaf includes the roller mechanism and in part the locking mechanism.

Preferably, the door leaf comprises at least one roller groove that receives and supports the rollers in a movable manner.

The invention provides an aircraft, preferably an airplane, comprising a previously described fuselage structure and/or a previously described door assembly.

It is an idea to provide an alternative to the traditional approach: a form-fit sliding door system that can replace the classical cargo doors currently used across a wide range of aircraft (A/C) programs. The sliding door system is designed to be not only lighter and more space-efficient, but also structurally robust, offering a bending-stiff integration with the fuselage and a direct load path for lateral pressure loads.

It is another idea to create a sliding door that operates through the inner and outer flanges of the aircraft's fuselage frames. This door can slide into place and seal the fuselage cut-out by closing the gap completely in its final locked position. A sealing that is suitably arranged can improve the closing of the gap. Rather than relying on complex actuation of multiple hooks and latches to create a form-fit with the aircraft fuselage, the sliding door leaf itself becomes part of the structural system, thereby distributing pressure and loads through a direct and continuous interface with the surrounding fuselage portions, in particular frames.

This design can take special advantage of the interface between the cylindrical and conical sections of the aircraft fuselage. By enabling the door to slide outward and then backward along this conical geometry, the system may eliminate wind load concerns during movement, allowing for safe operation even in outdoor or windy conditions. The backward sliding motion may occur entirely outside the fuselage skin, offering the added advantage of saving internal space and reducing the required clearance area inside the aircraft for door operation.

This approach allows a load-carrying sliding door system that is capable of withstanding and/or distributing pressure loads at least as effectively or even more so than traditional door mechanisms. In addition significant improvements in weight, complexity, and/or operational footprint can be achieved.

As the aerospace sector embraces alternative fuels such as hydrogen, it may be necessary to incorporate larger fuselage openings for equipment access, in particular for fuel tank maintenance. Consequently, the need for robust yet lightweight door systems also increases. The ideas disclosed herein offer a scalable, technically sound, and future-ready solution for these emerging needs.

The proposed form-fit sliding door system shows marked improvements over existing door technologies used in modern aircraft. It simplifies door integration, reduces weight and maintenance complexity, and offers a structurally improved alternative to conventional hinged systems. Its ability to be seamlessly incorporated across various aircraft platforms, whether for cargo or passenger applications, makes it a useful advancement in aircraft structural design.

In some embodiment the cut-out in the aircraft fuselage includes integrated locking interfaces. These interfaces may serve as the foundational points of engagement for the sliding door, allow it to lock securely in place when closed. Unlike traditional cargo doors, this cut-out is configured for a sliding mechanism, both in terms of geometry and structural reinforcement, which allows the door to integrate seamlessly within the contours of the aircraft fuselage.

The overall system may be configured as an active, load-bearing component of the aircraft's structural system. Once the door leaf is closed and locked, it may function as an extension of the fuselage, capable of distributing both aerodynamic and internal pressure loads effectively. In particular bending loads can be transferred between the door leaf and the fuselage. The sliding system itself is engineered so that, in its final position, the door is able to achieve a tight and continuous form-fit or frictional engagement with the surrounding fuselage structure. This direct interface allows to create a reinforced connection that can eliminate the need for external locking hooks or heavy hinges.

To ensure smooth and reliable movement, the door may operate on rollers, such as ball bearings, that may be integrated with a locking function. The bearings can reduce mechanical friction and wear, while also ensuring that the door can be firmly secured in place once it has been slid into position. Traditional aircraft door systems may often rely on spring-loaded components to close gaps and maintain seals; however, the disclosed solution can eliminate the need for such spring mechanisms. The overall system architecture can be simplified while at the same time the amount of potential points of failure can be reduced. Preferably a more consistent and reliable sealing can be achieved.

A passive sealing system is another idea of this design. The system may provide environmental sealing against factors such as air pressure differentials, moisture, and/or contaminants, without relying on powered actuators or complex mechanisms. The use of a passive system can increase reliability while reducing maintenance needs and energy consumption, making it a highly attractive solution for modern aircraft.

Another innovative aspect of the design lies in how the door moves during operation. Utilizing the conical geometry of the aircraft's rear fuselage section, the door can be moved outward and then slid backward along the external contour of the fuselage. This routing allows to keep the door entirely outside the aircraft body during its motion, which not only helps to avoid complications associated with internal clearance space but can also prevent the system from being affected by wind loads during operation. It is an elegant solution that has the potential to improve both safety and functionality.

When the door reaches its final position, it can be locked continuously along its perimeter in the vertical axis (typically referred to as the Z-axis in aircraft coordinate systems). This enables a secure and stable engagement with the fuselage. In addition to vertical locking, the system may also lock the door along the lateral axis, commonly referred to as the Y-axis, which can prevent any unintended movement along the centre longitudinal direction of the aircraft, commonly referred to as the X-axis. The multi-directional implementation of the locking mechanism allows that the door remains rigid and fully integrated into the aircraft's structure under most if not all operational conditions, including pressurization and flight loads.

The advantages of this system are numerous and align with the aerospace industry's general goals for weight reduction, increased reliability, and better space utilization. By eliminating the need for heavy continuous hinges, external hooks, and complex actuators, the system offers a significantly lighter structural solution. This reduction in weight contributes to improved fuel efficiency and increases the aircraft's available payload capacity.

In terms of space efficiency, the sliding door's outward and backward movement means that generally no additional interior clearance is required for its operation. This is especially valuable in areas where space is at a premium, such as tightly packed cargo holds or maintenance compartments.

The structural integration that can be achieved through this design is also a major benefit. Rather than acting as a separate or loosely attached component, the door can function as a true part of the fuselage structure. This allows it to carry and distribute loads-in particular bending loads-more effectively, thereby reducing stress concentrations on nearby fuselage elements and enhancing overall structural durability.

The simplicity and reliability of the system may be further enhanced by the reduction in moving parts and the use of passive systems for both movement and sealing. This not only lowers the likelihood of mechanical failure but also reduces maintenance demands over the life cycle of the aircraft.

The versatility of the disclosed idea allows it to be applied across a range of aircraft programs and use cases. While particularly well-suited for cargo doors, the design can also be implemented for passenger (PAX) doors, improving both the safety and ease of operation during boarding and disembarkation. Furthermore, the secure and space-saving characteristics of this system make it ideal for maintenance doors, especially those required for servicing hydrogen storage tanks in next-generation zero-emission aircraft.

In summary, the ideas presented herein allow for a substantial advancement in aircraft door technology, offering a structurally robust, lightweight, and highly reliable alternative to conventional hinged systems. It is a solution designed not only to meet the needs of today's aircraft but also to address the challenges of future aerospace innovations.

The invention provides a locking mechanism for a door assembly of an aircraft, the locking mechanism being switchable between an unlocked state, in which movement of an installed door leaf is possible, and a locked state, in which movement of the installed door leaf is prevented, the locking mechanism comprising a plurality of rollers disposed in a suitable manner to support and engage an installed door leaf of the door assembly; at least one roller support element that supports and engages the rollers, wherein in the unlocked state the roller support element engages the rollers so that the rollers are able to roll, wherein in the locked state the roller support element engages the rollers so that the rollers are prevented from rolling by means of frictional engagement with at least the roller support element.

Preferably, the locking mechanism further comprises at least one movable roller support element that supports and engages a first group of rollers and at least one stationary roller support element that is fixed, supports and engages a second group of rollers. Preferably, in the unlocked state the movable roller support element and the stationary roller support element engage the first group and the second group so that the respective rollers are able to roll. Preferably, the locked state is achievable by moving the movable roller support element closer towards the stationary roller support element in a manner that enables the first group to engage an installed door leaf or a stationary member to form a frictional engagement between the first group and the movable roller support. Preferably, in a manner that enables the second group and the stationary roller support element to form a frictional engagement therebetween due to the first group pushing on the installed door leaf or the stationary member.

Preferably, the locking mechanism further comprises at least one pair of movable roller support elements. Preferably, a first movable roller support element supports and engages a first group of rollers and a second movable roller support element supports and engages a second group of rollers. Preferably, in the unlocked state the movable roller support elements engage the first group and the second group so that the respective rollers are able to roll. Preferably, the locked state is achievable by moving the movable roller support elements away from one another in a manner that enables the first group and the second group to engage an installed door leaf or a stationary member to form a frictional engagement between the first group, the second group and the installed door leaf or the stationary member.

Preferably, the locking mechanism further comprises an actuation member that is arranged to move the roller support elements to generate the locked and unlocked states.

Preferably, the actuation member is configured to pivot or linearly shift the roller support elements to generate the locked and unlocked states.

Preferably, a load bearing joint is formed automatically due to movement of the door leaf into the fully closed position, preferably by automatically moving the actuation member, e.g., by means of a mechanical linkage.

The invention provides a door assembly of an aircraft, the door assembly comprising a previously described locking mechanism; a door leaf; a pair of guiderails that extend in a longitudinal direction and that support the door leaf in a load transferring manner. Preferably, the pair of guiderails defines a fuselage opening, Preferably, the guiderails support the door leaf in a sliding manner so that the door leaf is linearly movable along the guiderails between a fully open position, in which the fuselage opening is uncovered, and a fully closed position, in which the fuselage opening is closed. Preferably, the locking mechanism is configured such that in the unlocked state the door leaf is movable between the fully open position and the fully closed position, and in the locked position movement of the door leaf is prevented.

Preferably, one of the guiderails includes a movable roller support element that supports and engages a first group of rollers and the other one of the guiderails includes a stationary roller support element fixed to the guiderail, and that supports and engages a second group of rollers. Preferably, in the unlocked state the movable roller support element and the stationary roller support element engage the first group and the second group so that the respective rollers are able to roll to allow movement of the door leaf. Preferably, the locked state is achievable by moving the movable roller support element towards door leaf or the guiderail so that the first group engages the door leaf or the guiderail to form a frictional engagement between the first group, the movable roller support and the door leaf or guiderail, and so that the second group and the stationary roller support element form a frictional engagement therebetween due to the first group pushing on the door leaf or guiderail.

Preferably, the locking mechanism further comprises at least one pair of movable roller support elements, wherein a first movable roller support element supports and engages a first group of rollers and a second movable roller support element supports and engages a second group of rollers. Preferably, in the unlocked state the movable roller support elements engage the first group and the second group so that the respective rollers are able to roll. Preferably, the locked state is achievable by moving the movable roller support elements away from one another so that the first group and the second group engage the door leaf or the guiderail and form a frictional engagement therewith.

Preferably, each guiderail comprises a pair of side wall portions and a bottom portion that define a guiding channel which receives and supports the door leaf in a sliding manner.

Preferably, the locking mechanism is disposed on the guiderails, preferably on the side wall portions.

Preferably, the locking mechanism is partially disposed on the door leaf, wherein the actuation member is partially disposed on the bottom portion.

Preferably, the door leaf or each guiderail comprises at least one roller groove that receives and supports the rollers in a movable manner.

The invention provides a fuselage structure of an aircraft, the fuselage structure comprising a previously described door assembly; a plurality of frames that extend in a circumferential direction of the fuselage structure; an aerodynamic skin that is supported by the frames, wherein the pair of guiderails extend in a longitudinal direction of the fuselage structure and that are supported by the frames in a load transferring manner.

Preferably, the actuation member is at least partially disposed on one of the frames.

The invention provides an aircraft, preferably an airplane, comprising any of a locking mechanism, a door assembly, and a fuselage structure which were previously described.

The idea described herein generally presents an advancement in aircraft door systems, offering a practical, efficient, and/or structurally improved solution that can be incorporated across all aircraft (A/C) programs involving large fuselage cut-outs. This innovation is not limited to a specific aircraft type or configuration; rather, it is designed to be adaptable and scalable, providing improvements in door systems ranging from cargo and passenger (PAX) doors to specialized maintenance access points. Particularly relevant is its application for doors that enable maintenance on hydrogen storage systems, an area that is becoming increasingly important with the rise of alternative energy aircraft and zero-emission aviation initiatives.

Traditional cargo doors are typically attached to the fuselage using continuous hinges. These hinges are integrated along the entire edge of the door and typically require a precise frame pattern, often based on a 21-inch spacing typical to aircraft fuselage frames. In this configuration, the door achieves a form-fit with the fuselage through the use of actuated hooks that engage and hold the door in place during flight. While this method has been standard practice for decades, the hinges and hook mechanisms are typically heavy and expensive.

In these conventional systems, the internal pressure loads, generated from the pressurized cabin or cargo hold, are generally transferred from the door to the fuselage through strong door frames. These frames are designed to carry lateral loads, but they do not allow for a bending-stiff integration between the door and the fuselage.

The disclosed idea introduces a form-fit sliding door that may be integrated directly into the aircraft's fuselage structure. The door is designed not only to replace the classical hinged cargo door but also to surpass it in performance, load management, and efficiency. For example, rigidity and stability of the door-fuselage interface can be increased by the continuous, bending-stiff frame attachment compared to the classical design approach. Furthermore, the complexity of the aircraft structure and maintenance procedures can be reduced. It is also possible to take increased structural loads due to their efficient load path design.

It is an idea to enable a locking system that secures the door in the longitudinal axis of the aircraft (typically the X-direction), while simultaneously allowing the door to act as a form-fit, load-carrying element within the fuselage structure. This concept enables that the door becomes an integral part of the airframe rather than an appended structure, in particular when the locking mechanism is in its locked state.

In some embodiments the sliding mechanism operates through the inner and outer flanges of aircraft fuselage frames. When the door is moved into its final closed position, the sliding gap can be completely sealed, resulting in a tight, form-fit integration. This allows the door to engage structurally with the fuselage frames, in particular when the locking mechanism is locked, by creating a bending-stiff connection. The design provides a continuous and stable load path for lateral pressure loads, significantly enhancing the structural integrity of the entire assembly.

Another aspect of the system is its use of the interface between the conical and cylindrical sections of the aircraft fuselage. By exploiting this transition zone, the door can be moved sideways and then backward, outside the aircraft skin, in a manner that is unaffected by wind loads. This external movement is protected from aerodynamic interference and allows for safe, space-efficient operation. Additionally, since the door remains outside the fuselage during the sliding process, available internal cabin or cargo space is preserved, and operational efficiency can be improved.

Another component of this idea is its locking system, which secures the door in the X-direction once it has reached its final position. This enables that the door remains stable and fixed during flight, contributing to both safety and structural strength. The form-fit locking mechanism reinforces the door as a load-carrying structure, effectively making it a functional extension of the fuselage rather than a separate, detachable component.

In some embodiments ball bearings are used that also feature a locking function. These bearings not only facilitate smooth sliding movement but also serve to secure the door in place once it reaches its terminal position. This dual-purpose function allows to reduce the number of moving parts and simplifies the mechanical complexity of the system.

Another aspect involves the continuous form-fit locking of the door in the Z-direction, which corresponds to the vertical axis of the aircraft. By engaging the door along its entire perimeter vertically, this locking method ensures a consistent and secure attachment that resists vertical displacements or distortions that may be caused by pressurization or aerodynamic forces. Similarly, the system also allows to lock the door in the Y-direction-the lateral axis-thereby effectively blocking movement in the X-direction, by (additional) frictional engagement. The result is a stable, three-dimensional locking framework that maintains the door's position across all spatial dimensions.

In some embodiments a spreading mechanism is used that transforms the sliding motion into a locking motion. This enables a seamless transition from door movement to door fixation, without requiring separate mechanical stages. The invention also includes an actuated locking system designed for form-fit engagement and fuselage reinforcement, enhancing the safety and reliability of the assembly. A further idea addresses the inclusion of rolling support within the sliding system, contributing to the smooth, durable, and low-friction operation of the door over its service life.

In addition to its structural benefits, the invention offers improvements in weight efficiency. By eliminating the need for heavy continuous hinges and complex actuated hook systems, the overall weight of the door assembly can be reduced. This directly benefits the aircraft's performance by increasing fuel efficiency and payload capacity. Furthermore, the simplified mechanical architecture may reduce the number of components that are subject to wear and tear, which in turn can lower maintenance requirements and increase system reliability over time.

The disclosed idea is also highly versatile. It can be applied to cargo doors and passenger doors alike, offering improved safety, simplified operation, and reduced maintenance across multiple use cases. Furthermore, it can be implemented in the design of maintenance doors that provide access to critical components such as hydrogen storage tanks. As the aviation industry pivots toward cleaner energy sources and sustainable technologies, systems that allow secure and efficient access to these components will be essential. The proposed door system is ideally suited to meet those future demands.

Embodiments of the invention are described in more detail with reference to the accompanying schematic drawings that are listed below
Fig. 1 depicts a top view of an aft section of an aircraft,
Fig. 2 depicts a side view of the aft section with a door leaf in completely open position;
Fig. 3 depicts a side view of the aft section with the door leaf in a fully closed position;
Fig. 4 depicts an embodiment of a fuselage structure;
Fig. 5 depicts the fuselage structure with a roller mechanism;
Fig. 6 depicts the fuselage structure with a door assembly in an unlocked state;
Fig. 7 depicts the fuselage structure with the door assembly in a locked state;
Fig. 8 illustrates load transfer of the fuselage structure with the door assembly in the locked state;
Fig. 9 depicts another embodiment of a fuselage structure with a door assembly in the unlocked state; and
Fig. 10 depicts the fuselage structure with the door assembly in the locked state.

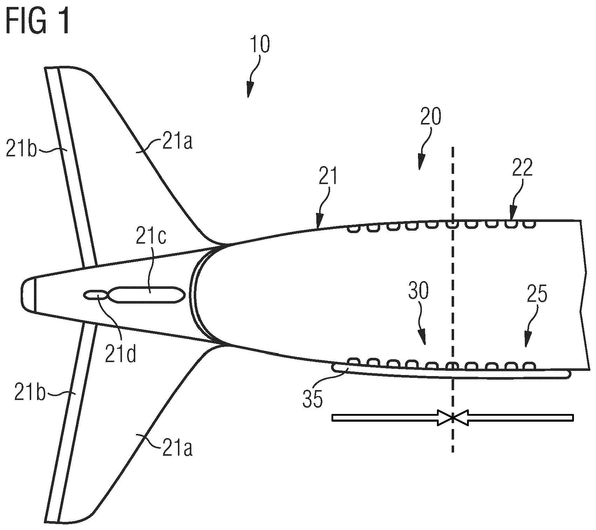

Referring to Fig. 1, an aft section of an aircraft 10 is depicted. It is useful to consider the following definitions: The longitudinal axis of the aircraft 10 is designated as the Z-axis, the vertical axis of the aircraft 10 is designated as the Y-axis and the lateral direction of the aircraft 10 is designated as the X-axis. It should be noted that instead of "axis" the term "direction" may also be used.

The aircraft 10 comprises a fuselage structure 20. In a manner known per se (and thus omitted), the aircraft 10 comprises wings for generating lift and engines for generating thrust, that are mounted to the fuselage structure 20.

The fuselage structure 20 comprises a tailplane portion 21. The tailplane portion 21 may include and support multiple functional surfaces, namely a horizontal stabilizer 21a, an elevator 21b, a vertical stabilizer 21c, and a rudder 21d in a manner known in the art.

The tailplane portion 21 comprises an aerodynamic skin 24 that forms an aerodynamic surface. The tailplane portion 21 has a general conical, tapered shape that tapers towards the aft direction. In other words, looking at a longitudinally progressing sequence of lateral cross-sections through the tailplane portion 21 (i.e., not considering the functional surfaces), the outer circumference of each cross-section decreases monotonically towards the aft. The cross-section generally has a circular or ellipsoidal shape.

The fuselage structure 20 further includes a main fuselage portion 22. The main fuselage portion 22 generally forms the main body of the aircraft 10. The main fuselage portion 22 has a general cylinder-like shape of only slightly varying diameter. In other words, looking at a longitudinally progressing sequence of lateral cross-sections through the main fuselage portion 22 (i.e. ignoring details, such as windows, doors, etc.), the outer circumference of each cross-section is about the same within a 5% to 10 % tolerance band. The cross-section generally has a circular or ellipsoidal shape.

The fuselage structure 20 includes a fuselage opening 25 that is preferably formed in circumferential section of the fuselage structure 20.

The aircraft 10 further comprises a door assembly 30 that is integrated into the fuselage structure 20. The door assembly includes a door leaf 35 that covers the fuselage opening 25, when in a closed position.

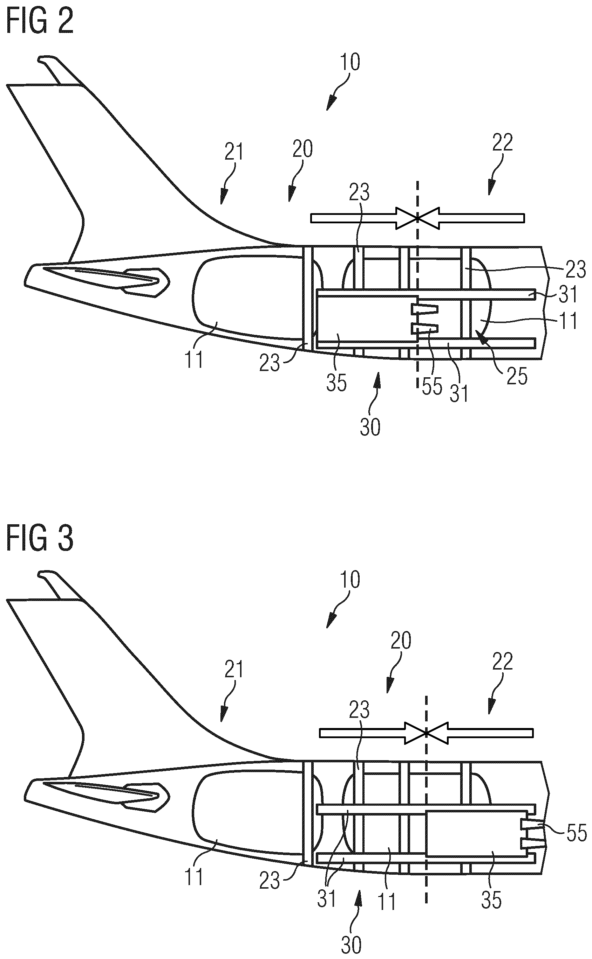

Referring to Fig. 2 and Fig. 3, the aircraft 10 is depicted in a sideview. The aircraft 10 may include one or more liquid hydrogen tanks 11. The liquid hydrogen tanks 11 may be accommodated within the tailplane portion 21 and an aft portion of the main fuselage portion 22. Preferably, one hydrogen tank 11 may bridge the boundary between the tailplane portion 21 and the main fuselage portion 22.

The fuselage structure 20 comprises a plurality of frames 23 that are spaced apart along the longitudinal direction with a predetermined distance, e.g., typically 21 inches. The frames 23 extend along the circumferential direction of the fuselage section 20. Not all frames 23 are shown for sake of clarity.

It should be noted that while the description focusses on hydrogen tanks 11, they can be seen as a stand-in for any other equipment that may need to undergo regular maintenance and that is generally only accessible through large fuselage openings 25. The fuselage openings 25 are typically large in that sense, if the span at least two or three frames 23 along the longitudinal direction of the fuselage structure 20.

The aircraft 10, specifically the fuselage structure 20, includes an aerodynamic skin 24. The aerodynamic skin 24 is supported by the frames 23.

As depicted in Fig. 2, the door assembly 30 is in the open position. As depicted in Fig. 3, the door assembly 30 is in the closed position. The door assembly comprises a pair of guiderails 31, which are examples of stationary members. The guiderails 31 are arranged at the top and bottom of the fuselage opening 25. The guiderails 31 are mounted to the frames 23. The guiderails 31 may be installed by cutting the frames 23 at the appropriate position to form the fuselage opening 25 and supporting the guiderails 31 by the remaining sections.

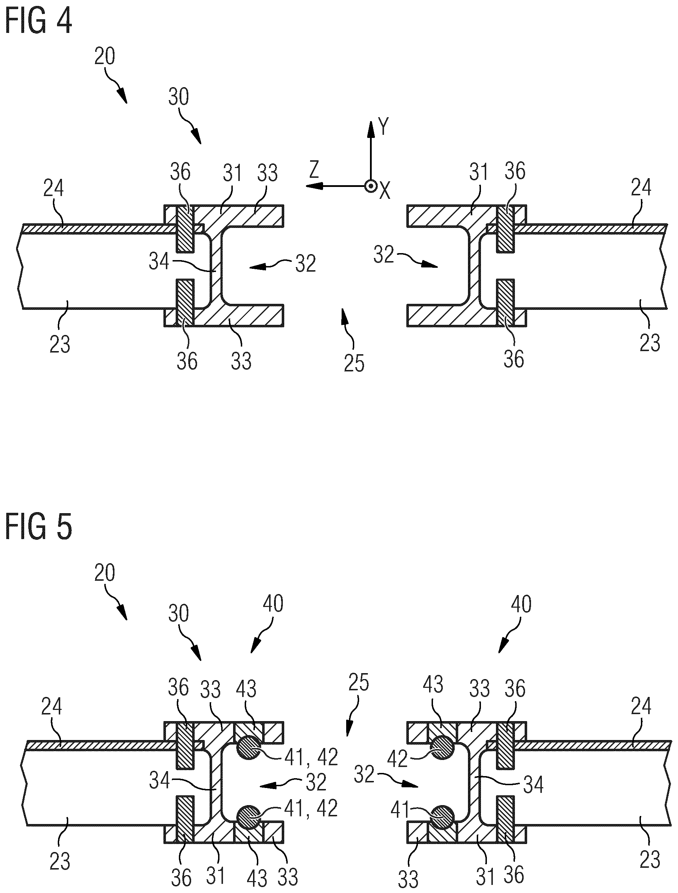

Referring to Fig. 4, a cross section through the fuselage structure 20 including the fuselage opening 25 is depicted. As indicated by the axes, the vertical up direction (Z-direction) is towards the left, the vertical down direction is towards the right, the lateral outward direction (Y-direction) is up, the lateral inward direction is down, the longitudinal forward direction (X-direction) is out of the drawing plane, and the longitudinal aftward direction is into the drawing plane. This orientation is maintained for all Fig. 4 through Fig. 10.

The guiderail 31 is suitable to receive and movably support the door leaf 35. As illustrated in Fig. 4, the guiderails 31 may include a guiding channel 32.

The guiding channel 32 may be a substantially U-shaped channel. The guiding channel 32 is open towards the fuselage opening 25. The guiderails 31 are arranged so that the respective guiding channels 32 face each other with their respective mouth.

The guiderail 31 may include a pair of side wall portions 33 and a bottom portion 34. The side wall portions 33 are spaced apart from each other by the bottom portion 34 along the Y-direction. The side wall portions 33 protrude from the bottom portion 34 along the Z-direction towards the respective opposite guiderail 31. The side wall portions 33 may also protrude from the bottom portion 34 and into the opposite directions, thereby forming a pair of flanges 37.

The bottom portion 34 contacts the frame 23. The bottom portion 34 extends parallel to the Y-direction.

The guiderail 31 is arranged to contact the frames 23 and the aerodynamic skin 24. The guiderail 31 may be fastened to the frame 23 by a plurality of bolts 36. Other fastening methods are possible such as adhesive bonding, crimping, or any other method that is typically used in the aerospace industry for fastening primary structure components.

Referring to Fig. 5, the fuselage structure 20, in particular the door assembly 30, may include a roller mechanism 40. The roller mechanism 40 is configured to support the door leaf 35, when it is installed.

The roller mechanism 40 may include a plurality of rollers 41. The rollers 41 are preferably arranged in a liner manner along the guiderail 31. The rollers 41 may be bearing balls 42. The rollers 41 are preferably disposed such that they are exposed to the guiding channel 32 so that the door leaf 35 can be supported by the rollers.

The roller mechanism 40 may include a plurality of roller support elements 43. Each roller support element 43 supports a plurality of rollers 41. The roller support element 43 may be an elongated profile. The roller support element 43 is preferably disposed on the side wall portions 33.

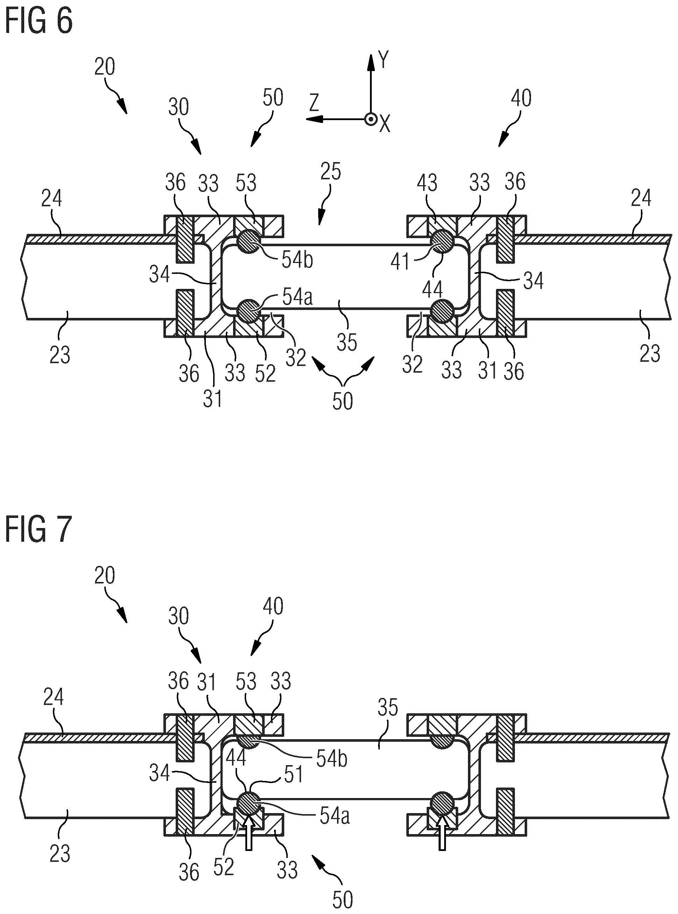

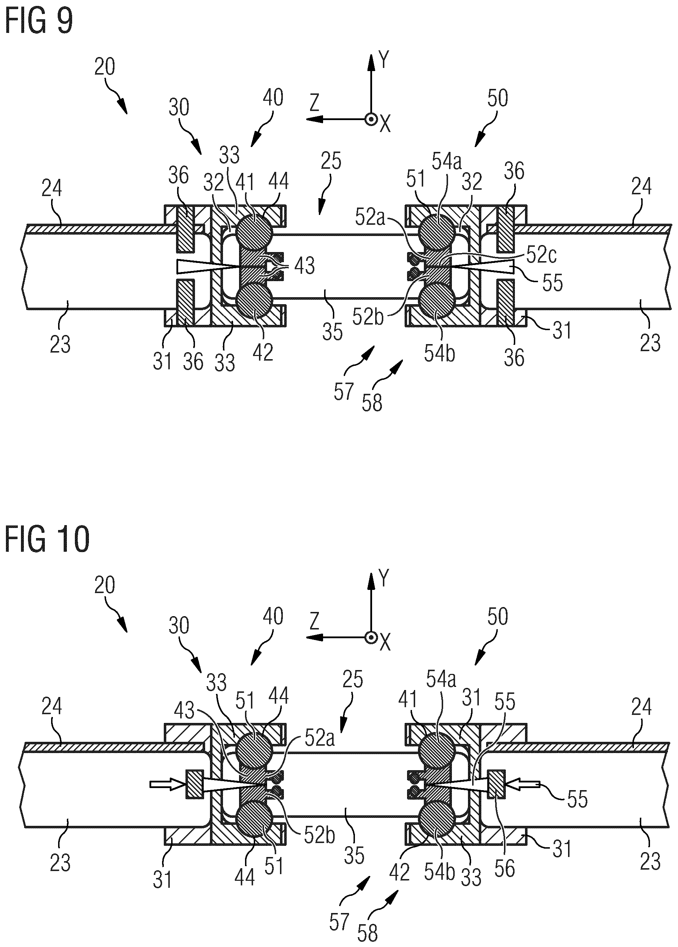

The roller mechanism 40 may include one or more roller grooves 44, which may be formed on the door leaf 35 (Fig. 6) or on the guiderails 31 (Fig. 9). The roller grooves 44 are shaped to receive the rollers 41 and allow easy movement of the rollers 41 within the roller grooves 44. Furthermore, the roller grooves 41 are preferably shaped to prevent a lateral movement (which corresponds to a vertical movement relative to the fuselage structure 20) of the rollers 41 relative to the sides of the roller grooves 41.

Referring to Fig. 6, the fuselage structure 20, in particular the door assembly 30, may include a locking mechanism 50, which is illustrated in the unlocked state. The locking mechanism 50 may include a plurality of locking recesses 51. The locking recesses 51 are preferably shaped to receive the rollers 41. The locking recess 51 may be formed to form a positive engagement (also called form-fitting engagement) with the rollers 41. Additionally or alternatively the locking recess 51 may be configured to form a frictional engagement with the rollers 41. The locking recesses 51 are preferably formed within the roller groove 44.

The locking mechanism 50 may include movable roller support elements 52. Each movable roller support element 52 is configured to support a first group 54a of the rollers 41 so that they can roll in the unlocked state. The movable roller support elements 52 are preferably arranged on one side of the guiderails 31 or guiding channels 32, e.g., the side wall portions 33.

The locking mechanism 50 may include stationary roller support elements 53. Each stationary roller support elements 53 is configured to support a second group 54b of the rollers 41 so that they can roll in the unlocked state. The stationary roller support elements 53 are preferably arranged on the opposite side of the guiderails 31 or guiding channels 32 relative to the movable roller support elements 52.

Referring now to Fig. 2, Fig 3, and Fig. 6 through Fig. 8 the operation of the door assembly 30 is described in more detail. Initially the door assembly 30 is in the open position (Fig. 2) and the locking mechanism 50 is in the unlocked state (Fig. 6). In this state the hydrogen tanks 11 (or other equipment) are accessible for maintenance through the fuselage opening 25. The door leaf 35 is supported by the guiderails 31 and can linearly move within the respective guiding channel 32. In this state the door leaf 35 is laterally outward of the tailplane portion 31. This may be achieved by the guiderails 31 being configured as telescoping guiderails 31 similar to telescoping elements on a sliding drawer. As this mechanism is well understood and known per se it is not shown or explained in detail.

If in this state a gust of wind impinges on the door leaf 35, the force can be transferred from the door leaf 35 through the roller mechanism 40 and the guiderails 31 into the frames 23. Thereby the door leaf 35 is securely supported and can be prevented from moving due to the wind.

The door assembly 30 may be closed by manually moving the door leaf 35 along the guiderails 31. The telescoping guiderails 31 move along until the door leaf 35 reaches the fully closed position (Fig. 3). During movement the door leaf 35 is again securely supported against external, preferably lateral, forces, and the rollers 41 make movement easy along the longitudinal direction.

Towards the end of travel of the door leaf 35, the locking mechanism 50 may be actuated by an actuation member 55 that can be operatively coupled to the movable roller support elements 52, e.g., via a mechanical linkage or an electronic control system that are known per se (both not shown for sake of clarity). The actuation member 55 may cause the movable roller support elements 52 to push against the door leaf 35 via the first group 54a. Thus, the door leaf 35 is pushed away from the centre of the fuselage opening 25 along the lateral Y-direction outwards. The first group 54a is thus pushed into the locking recesses 51 on the inward side of the door leaf 35. The door leaf 35 is pushed outwards against the stationary member 31, which in this example is formed by the respective guiderail 31. The lateral movement of the door leaf 35 may further cause the second group 54b to be pushed into the locking recesses 51 on the outward side of the door leaf 35, as the door leaf 35 may contact the stationary roller support element 53.

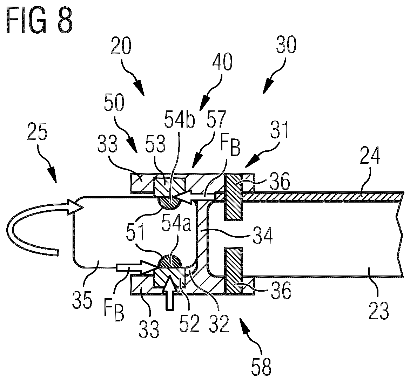

As shown in Fig. 8 in more detail, the first group 54a and/or the second group 54b form a positive engagement with the door leaf 35. The door leaf 35 and the guiderail 31 are connected by a load bearing joint 57, i.e. a joint which is capable of transferring loads. Preferably, the load bearing joint 57 is a bending-stiff joint 58. As indicated, if a force acting laterally on the door leaf 35 causes bending forces F_{B}, these bending forces F_{B} can be transferred from the door leaf 35 via the locking recesses 51, the movable and/or stationary roller support elements 52, 53, and the guiderail 31 to the frames 23. Thus, the fuselage structure 20 and the door assembly 30, specifically the door leaf 35, are integrated in a bending-stiff manner.

It should be noted that alternatively or additionally the load bearing joint 57 may be formed by means of frictional engagement. For frictional engagement, the movable and/or stationary roller support elements 52, 53 are pressed against the first and/or second group 54a, 54b such that friction between the respective roller support elements 52, 53 and the associated group 54a, 54b prevents the respective rollers 41 from moving.

Referring to Fig. 9 and Fig. 10 another embodiment of the door assembly 30 is described in more detail insofar as it differs from the previous embodiment.

The locking mechanism 50 includes a first and second movable roller support elements 52a, 52b. The first and second movable roller support elements 52a, 52b are preferably disposed within the door leaf 35. The first and second movable roller support elements 52a, 52b can each pivot about an axis that is substantially parallel to the door leaf 35, i.e. the longitudinal direction. The first and second movable roller support elements 52a, 52b are spaced apart from each other along the lateral Y-direction, e.g., forming a gap 52c therebetween.

The locking mechanism 50 may further include an actuation member 55 that is preferably configured in the form of a wedge. The locking mechanism 50 may further include a control cam 56 that is configured to engage the actuation member 55 at a certain location.

Fig. 9 depicts the door assembly 30 in a nearly closed position and in the unlocked state. In this configuration, the door leaf 35 is supported by the guiderails 31 and able to move within the guiding channel 32. The roller groove 44 and the locking recesses 51 are disposed on the guiderail 31, specifically on the side wall portions 33.

Fig. 10 depicts the door assembly 30 in the fully closed position and in the locked state. During movement of the door leaf 35 along the guiderails 31 the actuation members 55 may move with it. At a certain point of travel of the door leaf 35, the actuation members 55 engage the control cam 56 and are pushed towards the centre of the door leaf 35. The actuation member 55 is pushed into the gap 52c and causes the first and second movable roller support elements 52a, 52b to pivot about the pivot axis and press the respective first and second group 54a, 54b towards the stationary member, e.g., the guiderail 31. This forms a frictional engagement between the door leaf 35 and the guiderails 31 via the first and second groups 54a, 54b.

To unlock the locking mechanism 50 again a substantial force may be applied that exceeds the frictional locking force, i.e. using some sort of lever. It is also possible to have a release mechanism (not shown) that allows the control cam 56 and thus the actuation member 55 to slightly move causing the first and second movable roller support elements 52a, 52b to allow the first and second groups 54a, 54b to move again. It should be noted that such mechanisms are known and thus not shown or described in more detail herein.

### List of reference signs:

- 10: aircraft
- 11: hydrogen tank

- 20: fuselage structure
- 21: tailplane portion
- 21a: horizontal stabilizer
- 21b: elevator
- 21c: vertical stabilizer
- 21d: rudder
- 22: main fuselage portion
- 23: frame
- 24: aerodynamic skin
- 25: fuselage opening

- 30: door assembly
- 31: guiderail (stationary member)
- 32: guiding channel
- 33: side wall portion
- 34: bottom portion
- 35: door leaf
- 36: bolt
- 37: flange

- 40: roller mechanism
- 41: rollers
- 42: bearing balls
- 43: roller support element
- 44: roller groove

- 50: locking mechanism
- 51: locking recess
- 52: movable roller support element
- 52a: first movable roller support element
- 52b: second movable roller support element
- 52c: gap
- 53: stationary roller support element
- 54a: first group
- 54b: second group
- 55: actuation member
- 56: control cam
- 57: load bearing joint
- 58: bending-stiff joint

- F_{B}: bending force

## Claims

1. A fuselage structure (20) of an aircraft (10), the fuselage structure (20) comprising:
- a plurality of frames (23) that extend in a circumferential direction of the fuselage structure (20);
- an aerodynamic skin (24) that is supported by the frames (23);
- at least one pair of guiderails (31) that extend in a longitudinal direction of the fuselage structure (20) and that are supported by the frames (23) in a load transferring manner, wherein each pair of guiderails (31) defines a fuselage opening (25),
wherein the guiderails (31) are configured to support a door leaf (35) in a sliding manner so that the door leaf (35) is movable along the longitudinal direction between a fully open position, in which the fuselage opening (25) is uncovered, and a fully closed position, in which the fuselage opening (25) is closed.

2. The fuselage structure (20) of claim 1, further comprising a roller mechanism (40) that is disposed on the guiderails (31) and includes a plurality of rollers (41) that are configured to engage a door leaf (35) to allow a sliding movement thereof.

3. The fuselage structure (20) of claim 2, wherein each guiderail (31) comprises at least one roller groove (44) that is configured to receive and support the rollers (41) in a movable manner.

4. The fuselage structure (20) of any of the preceding claims, further comprising a locking mechanism (50) that is switchable between an unlocked state, in which movement of an installed door leaf (35) is possible, and a locked state, in which movement of the installed door leaf (35) is prevented.

5. The fuselage structure (20) of claim 4, wherein the locking mechanism (50) is integrated into the roller mechanism (40) so that the locking mechanism (50), when in the locked state, exerts a force on the rollers (41) to prevent movement by means of frictional engagement and/or positive-locking.

6. The fuselage structure (20) of claim 4 or 5, wherein in the unlocked state, the rollers (41) are able to roll, and in the locked state the rollers (41) are forced against the guiderail (31), preferably a side wall portion (33) thereof, or towards an installed the door leaf (35).

7. The fuselage structure (20) of any of the preceding claims, wherein the guiderails (31) are configured to enable a load bearing joint (57) between a door leaf (35) guided therein and the frames (23), and the load bearing joint (57) is able to transfer bending loads and/or the load bearing joint (57) includes or consists of a bending-stiff joint (58).

8. The fuselage structure (20) of claim 7, wherein the load bearing joint (57) is formed at least in the fully closed position, preferably at least partially by means of the locking mechanism (50) being in the locked state.

9. The fuselage structure (20) of any of the preceding claims, wherein each guiderail (31) comprises a pair of side wall portions (33) and a bottom portion (34) that define a guiding channel (32) which is configured to receive and support a door leaf (35) in a sliding manner.

10. The fuselage structure (20) of claim 9, wherein the roller mechanism (40) and/or the locking mechanism (50) is disposed on at least one of the side wall portions (33); and/or wherein the roller mechanism (40) is disposed on at least one of the side walls, wherein the locking mechanism (50), preferably an actuation member (55) of the locking mechanism (50), is partially disposed on the bottom portion (34).

11. The fuselage structure (20) of claim 9 or 10, wherein each roller groove (44) is disposed or formed on the side wall portions (33).

12. A door assembly (30) of an aircraft (10), the door assembly (30) comprising a fuselage structure (20) of any of the preceding claims, and a door leaf (35) that is supported to slide in the guiderails (31).

13. The door assembly (30) of claim 12, wherein the door leaf (35) includes the roller mechanism (40) and in part the locking mechanism (50).

14. The door assembly (30) of claim 12 or 13, wherein the door leaf (35) comprises at least one roller groove (44) that receives and supports the rollers (41) in a movable manner.

15. An aircraft (10), preferably an airplane, comprising a fuselage structure (20) of any of the claims 1 to 11 and/or a door assembly (30) of any of the claims 12 to 14.
